(19) Europäisches Patentamt
European Patent Office
Office européen des brevets

(11) **EP 2 785 753 B1**

(12) **EUROPEAN PATENT SPECIFICATION**

(45) Date of publication and mention
of the grant of the patent:
**20.04.2016 Bulletin 2016/16**

(21) Application number: **12795287.7**

(22) Date of filing: **20.11.2012**

(51) Int Cl.:
*C08F 214/26* [(2006.01)]   *B29C 71/02* [(2006.01)]
*C08J 5/00* [(2006.01)]

(86) International application number:
**PCT/US2012/066141**

(87) International publication number:
**WO 2013/081920 (06.06.2013 Gazette 2013/23)**

(54) **TETRAFLUOROETHYLENE/PERFLUORO(ALKYL VINYL ETHER) COPOLYMER HAVING AN INCREASED MELTING TEMPERATURE**

TETRAFLUOROETHYLEN-/PERFLUOR (ALKYL VINYL ETHER)-COPOLYMER MIT ERHÖHTER SCHMELZTEMPERATUR

COPOLYMÈRE TÉTRAFLUOROÉTHYLÈNE/PERFLUORO(ALKYL VINYL ÉTHER) AYANT UNE TEMPÉRATURE DE FUSION ACCRUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2011 US 201161564914 P**

(43) Date of publication of application:
**08.10.2014 Bulletin 2014/41**

(73) Proprietor: **E. I. du Pont de Nemours and Company Wilmington, DE 19898 (US)**

(72) Inventor: **BURCH, Heidi Elizabeth Bear, Delaware 19701 (US)**

(74) Representative: **Matthews, Derek Peter Dehns St Bride's House 10 Salisbury Square London EC4Y 8JD (GB)**

(56) References cited:
**US-A- 4 487 902    US-A1- 2008 118 691**

**Description**

**FIELD OF INVENTION**

This invention relates to melt-fabricable tetrafluoroethylene/-perfluoro(alkyl vinyl ether) copolymer and more particularly to a method for increasing the melting temperature of the copolymer.

**BACKGROUND OF INVENTION**

Polytetrafluoroethylene (PTFE) is well known for its high melting temperature, i.e. well above 330°C (first heating), and non flowability in the molten state, requiring fabrication methods, such as compression molding, paste extrusion, and ram extrusion, that do not involve flow of the copolymer in the molten state. Paste extrusion is carried out at on a PTFE/lubricant oil mixture a temperature well below the melting temperature of the PTFE, followed by heating the paste extrudate to volatilize the oil, and heating the resultant extrudate at a temperature above the melting temperature to sinter the extrudate. Compression molding and ram extrusion are fabrication processes that involve compaction of particles of PTFE. The resultant compacted shape can be sintered as part of the compaction process or subsequent to such process. During sintering, the compacted PTFE particles coalesce to form an essentially non-porous shape. While this coalescence involves an almost imperceptible amount of melt flow of the PTFE particles, there is no melt flow of the mass of the PTFE melt. Consequently, billets of compacted PTFE particles are heated above the melting temperature of the PTFE to cause sintering, without any containment of the billet. Nevertheless, the billet retains its shape because of the non-melt flowability of the PTFE. In essence, the fabrication of PTFE involving heating the PTFE above its melting temperature to cause sintering of the PTFE does not involve shearing the PTFE melt. The non-melt flowability, non-melt processibility of PTFE prevents the melt from being sheared.

Tetrafluoroethylene/perfluoro(alkyl vinyl ether) copolymer, commonly referred to as PFA, is well known to have flowability in the molten state, whereby PFA this is melt-processible can by such well known processes as extrusion and injection molding. The perfluoro(alkyl vinyl ether) comonomer in the PFA provides this melt flowability and thus melt fabricability, but at the expense of a reduced melting temperature as compared to that of PTFE. Most commercial PFAs have a melting temperature (first heating) of no greater than 310°C, some as low as 280°C (source: S. Ebnesajjad, Fluoroplastics, Vol. 2, Melt Processible Fluoropolymers, The Definitive User's Guide and Databook, published by Plastics Design Library, pp. 125-127 (2003)), depending on the identity of the perfluoro(alkyl vinyl ether) commoner and its amount to provide the melt flowability desired. While PFA remains in the solid state at temperatures below its melting temperature, in contrast to PTFE, PFA flows when heated to a temperature above its melting temperature. This limits the high temperature utility of articles melt fabricated from PFA to temperatures less than the melting temperature.

The melting temperature of PFA can be increased by reducing the amount of perfluoro(alkyl vinyl ether) comonomer present in the PFA, but this has the disadvantage of reducing the melt flowability of the PFA, thereby increasing the difficulty of melt fabrication, and even preventing melt fabrication from being carried out if the comonomer content is reduced too much.

The problem is how to preserve the desired melt flowability of the PFA while increasing its melting temperature.

**SUMMARY OF INVENTION**

The present invention solves this problem by the process comprising providing melt-fabricable tetrafluoroethylene/perfluoro(alkyl vinyl ether) copolymer (PFA) having a melting temperature (Tm1), melt fabricating the PFA into an article having the shape desired for final usage (final-shape article), and heat aging the final-shape article for at least 24 hours at a temperature of at least 295°C but less than Tm1, to obtain a copolymer melting temperature (Tm2) that is at least 6°C greater than Tm1. The final shape of the melt-fabricated article is the shape of the article that is used for its intended application. In the case of extrusion, the final shape would not include molding pellets, which are used for re-extrusion into the final-shape article. The final shape of the extrudate, however includes electrical insulation over an electrical conductor, wherein the insulated wire is cut to the desired length. In the case of injection molding, the final shape is the injection molded shape, whether a single article or multiple articles interconnected by runners (splines). The final injection molded shape is the molded article(s) minus the sprue and interconnecting splines if any. The final shape may include visible mold parting lines or these may be ground away. The same is true for any burrs corresponding to mold parting lines.

The result of the process of the present invention is a melt-fabricated article having its final shape made from tetrafluoroethylene/-perfluoro(alkyl vinyl ether) copolymer that has the melt flowability desired for melt fabrication and a significant increase in melting temperature. This is achieved at a given perfluoro(alkyl vinyl ether) comonomer content, thereby not requiring a reduced comonomer content (to increase melting temperature) that would decrease melt flowability.

The heat aging of the final-shape article is carried at a temperature at which the final-shape article retains its final shape. Thus the heat aging is carried out at a temperature that is less than the melting temperature (Tm1) of the tetrafluoroethylene/perfluoro(alkyl vinyl ether) copolymer prior to heat aging. Preferably, the amount of perfluoro(alkyl vinyl ether) present in the tetrafluoroethylene/perfluoro(alkyl vinyl ether) copolymer having said Tm1 is effective to provide said copolymer with a melting temperature (Tm1) of at least 300°C. Melting temperature is determined by differential scanning calorimetry (DSC) according to ASTM D-4591, which includes heating the copolymer at a rate of 10°C/min starting at 200°C and ending at 350°C. The melting temperature of the copolymer is the peak temperature of the endotherm obtained from melting of the copolymer in accordance with this heating schedule. For Tm1, the melting temperature is the endotherm from the first heating of the copolymer. For Tm2, the melting temperature is the endotherm from the first heating of the copolymer taken from the final-shape article after heat aging in accordance with the present invention.

Preferably, the tetrafluoroethylene/perfluoro(alkyl vinyl ether) copolymer exhibiting Tm1 is high molecular weight, which results in high melt viscosity. Preferably this high molecular weight and corresponding high melt viscosity is characterized by the copolymer having a melt flow rate of no greater than 10 g/10 min.

Examples of final-shape articles are electrical insulation, tubing, and carriers of tetrafluoroethylene/perfluoro(alkyl vinyl ether) copolymer characterized by a melting temperature that is at least 6°C greater than the melting temperature of said tetrafluoroethylene/- perfluoro(alkyl vinyl ether) copolymer as-polymerized. As-polymerized copolymer is the copolymer prior to heat aging. The melting temperature of the as-polymerized copolymer is the melting temperature Tm1, and the melting temperature of the copolymer (taken from the final-shape article) after heat aging is Tm2. The difference between Tm1 and Tm2 is the increase in melting temperature exhibited by the copolymer of the heat-aged final shape article.

## DETAILED DESCRIPTION OF INVENTION

The tetrafluoroethylene/perfluoro(alkyl vinyl ether) copolymers used in the present invention are those that are melt flowable so as to enable them to be melt fabricable. By melt fabricable is meant that the perfluoropolymer is sufficiently flowable in the molten state that it can be fabricated by melt processing such as extrusion, to produce products having sufficient strength so as to be useful. This sufficient strength may be characterized by the copolymer by itself preferably exhibiting an MIT Flex Life of at least 1000 cycles, preferably at least 2000 cycles using 8 mil (0.21 mm) thick film as determined by according to ASTM D-2176. In the MIT Flex Life test, the film is gripped between jaws and is flexed back and forth over a 135° range. In this case, the strength of the copolymer is indicated by it not being brittle.

The copolymer used in the present invention is a fluoroplastic, not a fluoroelastomer. As a fluoroplastic, the perfluoropolymer is semicrystalline, also called partially crystalline. The crystallinity of the copolymer is preferably characterized by the copolymer exhibiting a heat of fusion (first heating) by differential scanning calorimetry (DSC) of at least 9 J/gm as determined according to ASTM D-4591.

The melt flowability of the tetrafluoroethylene/perfluoro(alkyl vinyl ether) copolymer is preferably determined as melt flow rate (MFR) according to ASTM D-3307, wherein the temperature of the copolymer melt in the plastometer is 372°C and the weight on the melt forcing it through the plastometer orifice is 5 kg (MFR). Preferably, the copolymer prior to heat aging exhibits an MFR of at least 0.1 g/10 min, preferably at least 0.5 g/10 min, and most preferably, at least 2 g/10 min. The copolymer exhibiting any of these minimum MFRs preferably has an MFR of no greater than 10 g/min, more preferably no greater than 9 g/10 min, even more preferably, no greater than 7 g/10 min.

The minimum flex life, heat of fusion and the MFRs mentioned above apply to any and all the tetrafluoroethylene/perfluoro(alkyl vinyl ether) copolymers mentioned below.

The tetrafluoroethylene/perfluoro(alkyl vinyl ether) copolymer used in the present invention is commonly referred to PFA, it being a copolymer of tetrafluoroethylene (TFE) and perfluoro(alkyl vinyl ether) (PAVE). Preferably, the perfluoroalkyl group of PAVE is linear or branched and contains 1 to 5 carbon atoms. Preferred perfluoroalkyl groups, whether linear or branched, contain 1, 2, 3 or 4 carbon atoms, which are respectively, perfluoro(methyl vinyl ether) (PMVE), perfluoro(ethyl vinyl ether) (PEVE), perfluoro(propyl vinyl ether) (PPVE), and perfluoro(butyl vinyl ether) (PBVE). The copolymer can include a mixture of be several perfluoroalkyl groups PAVE, such as the TFE/perfluoro(methyl vinyl ether)/perfluoro(propyl vinyl ether) copolymer, sometimes called MFA by the manufacturer, but included as PFA herein. The PFA may contain about 1-15 wt% PAVE, preferably 2 to 10 wt% PAVE, the remainder to total 100 wt% of the copolymer being TFE, When PAVE includes PMVE, the composition is preferably 0.5-13 wt% PMVE and 0.5 to 3 wt% PPVE, the remainder to total 100 wt% of the copolymer being TFE. Preferably, the identity and amount of PAVE present in the PFA is such that the melting temperature (Tm1) of the PFA is at least 300°C and more preferably at least 305°C. Preferably the melting temperature (Tm1) of the PFA is no greater than 310°C. Examples of PFA are disclosed in U.S. Patents 3,635,926 (Carlson) and 5,932,673 (Aten et al.).

The preferred perfluoroalkyl group is PPVE, present in the copolymer in any of the amounts mentioned above. A preferred combination of PPVE and MFR is 3.5 to 4 wt% PPVE, wherein the copolymer has an MFR of 2 to 7 g/10 min. These copolymers preferably exhibit a melting temperature (Tm1) of 308-310°C and a melting temperature Tm2 after heat aging of at least 316°C. Another preferred combination of PPVE and MFR is 4.5 to 5 wt% PPVE, wherein the MFR is 3 to 8 g/10 min. These copolymers preferably exhibit a melting temperature Tm1 of 305-308°C and a melting temperature Tm2 after heat aging of at least 312°C.

The melt fabrication of any and all of the tetrafluoroethylene/-perfluoro(alkyl vinyl ether) copolymers mentioned above, including their compositions, Tm1s, and MFRs, can be carried out using any melt fabrication process, such as now used for forming final-shape articles made of the copolymer. Examples of suitable melt fabrication processes include extrusion, injection molding, blow molding, and transfer molding. The extrusion process is carried out on the copolymer heated above its melting temperature, whereby this process is melt extrusion. This differs from the paste extrusion of PTFE, which is carried out on a PTFE/oil mixture at temperatures well below the melting temperature of the PTFE, so as to avoid volatilizing the oil during the paste extrusion process.

Preferably, the melt fabrication step involve shearing the molten copolymer, as occurs in each of these melt fabrication processes. The rate at which the copolymer melt is sheared will depend on the fabrication process. For example extrusion of tubing of the molten copolymer can be practiced at shear rate as low as 1 sec$^{-1}$. The same is true for extrusion of molten copolymer for thick wire insulations and transfer molding. Extrusion of molten copolymer as thin wire insulation and injection molding of molten copolymer will generally involve subjecting the copolymer melt to a shear rate of at least 50 sec$^{-1}$, or at least 75 sec$^{-1}$, or at least 100 sec$^{-1}$. The shear rate for injection molding can reach 1000 sec$^{-1}$ and higher. Thus, the shear rate for these melt fabrication processes, all of which involve forcing molten copolymer through an orifice, is at least 1 sec$^{-1}$ and can reach 1000 sec$^{-1}$ or higher. Depending on the melt fabrication process and the final-shape article being made, the minimum shear rate to which the molten copolymer is subjected can be at least 10 sec$^{-1}$, or at least 20 sec$^{-1}$, at least 30 sec$^{-1}$ or at least 40 sec$^{-1}$, or any of the shear rates mentioned above. The melt fabrication can be compression molding, which involves pressing molten copolymer in a mold, whereby there is no orifice through which the molten copolymer is forced, whereby there is minimal to no shear of the molten copolymer. This absence of shear in the compression molding process can be quantified as a shear rate of less than 0.1 sec$^{-1}$.

Shear rate is the volumetric flow rate of the molten copolymer through the orifice divided by a volumetric factor that is dependent on the geometry of the orifice. In terms of mass flow rate, wherein p is the density of the molten copolymer (1.492 g/cm$^3$ for PFA), the equation for calculating shear rate in reciprocal seconds (sec$^{-1}$) through a circular orifice is as follows:

$$\text{Shear rate in sec}^{-1} = [Q/900\ \pi\rho R^3] \times 10^6$$

wherein Q is the extrusion rate in kg/hr, p is the density of the PFA melt, and R is the radius of the extrusion orifice in mm.

Examples of final-shape-articles that can be made by the melt fabrication process using any and all of the tetrafluoroethylene/-perfluoro(alkyl vinyl ether) copolymers mentioned above, including their compositions, Tm1s, and MFRs, include electrical insulation, tubing, and carriers. The electrical insulation can be primary or secondary insulation. The tubing can be pipe and can include linings made from the copolymer used in the present invention. The carriers are articles that are used for transporting objects through one or more processing steps, such as silicon wafers in semiconductor manufacture. The carriers can be baskets for containing the objects to be subjected to processing or brackets (hangers) to which objects are secured.

The heat aging can be carried out by exposing the final-shape article a temperature of at least 295°C which does not distort the final shape article by causing melt flow. In other words, the final-shape article retains its shape. The heat aging can be carried out in a circulating air oven. To achieve the increase in melting temperature of at least 6°C, preferably at least 7°C, the heat aging is preferably carried out for at least 24 hr. Additional heat aging, such as for a total of 7 days, has little effect on the increase in melting temperature obtained by 24 hrs of heat aging. The heating for 24 hrs and the total heating for 7 days does not cause deterioration of physical properties such as flex life or tensile properties. Preferably the melting temperature after heat aging (Tm2) of the copolymer from which the final-shape article is melt fabricated is greater than 310°C and more preferably greater than 312°C, and even more preferably at least 314°C and most preferably, greater than 315°C.

The heating of the copolymer in the practice of the melt fabrication step of the process of the present invention has no discernible effect on melting temperature Tm1. The melting temperature of the copolymer after melt fabrication is the same as the melting temperature before melt fabrication. Thus, the Tm1 is the melting temperature of the as-polymerized copolymer, whether determined on the copolymer before of after melt fabrication.

All parameters expressed herein as being "at least" a stated numerical value can be restated as being that value or greater than that value. For example, at least 295°C can be restated as 295°C or greater than 295°C. All parameters expressed herein as being "no greater than" a stated numerical value can be restated as that value or less than that value. For example, no greater than 10 g/10 min can be restated as 10 g/10 min or less than 10 g/10 min.

## EXAMPLES

The water used in the polymerization reactions described in these Examples is deionized deaerated water.

Example 1 - PPVE contents less than 4 wt%

Precharge to polymerization reactor

54.0 lb (24.5 kg) water
240 mL 20 wt% ammonium perfluorooctanoate solution

Pumped initiator solution:

1. 2.0 g ammonium persulfate diluted to 1000 mL with DM water

Operating procedure:

1. Pressure test at 25°C and 300 psig (3100 kPa). Agitate at 50 rpm.
2. Evacuate and purge three times with TFE at 25°C.
3. Pressure the reactor with ethane to give an 8 in (20.3 cm) Hg pressure rise at the field gauge.
4. Bring the reactor to 73°C and allow it to equilibrate.
5. Add 160 mL PPVE.
6. Pressure the reactor to 300 psig (3100 kPa) with TFE.
7. Pump 400 mL of initiator solution at 50 mL/min, then reduce addition rate to 5 mL/min for the remainder of the batch.
8. Allow a 10 psig (102.3 kPa) pressure drop to determine kickoff of the polymerization reaction at 73°C, then begin pumping PPVE at 1.6 mL/min for the remainder of the batch.
9. After kickoff, adjust the pressure to allow 20 lbs (9.1 kg) of TFE to react in 120 min. Maintain the agitator at 50 rpm.
10. After 20 lbs( 9.1 kg) of TFE have been consumed, shut off the TFE, PPVE, and initiator feeds, stop the agitator, and vent the reactor.
11. When the reactor pressure has reached 5 psig (51.7 kPa), sweep the reactor with nitrogen.
12. Cool to 50°C before removing the aqueous dispersion of

TFE/PPVE copolymer from the reactor.
The TFE/PPVE copolymer is coagulated and recovered from the aqueous medium, followed by drying. Tm1 is determined on the dried copolymer. The copolymer is then compression molded at 340°C (10 min molding cycle time) into plaques that are heat aged at 300°C in an air circulating Blue M® convection oven for 24 hrs. Tm2 is determined on copolymer taken (cut) from the plaques. The results of this polymerization reaction and two repetitions thereof with changes noted below are shown in Table 1.

Table 1

| Exp. | PPVE content - wt% | Tm1 -°C | MFR - g/10 min | Tm2-°C |
|------|--------------------|---------|----------------|--------|
| 1 | 3.669 | 308.6 | 2.57 | 317.9 |
| 2 | 3.81 | 308.6 | 4.70 | 317.0 |
| 3 | 3.89 | 308.4 | 6.44 | 316.8 |

The polymerization reaction of Experiment 1 is conducted at 73°C. The polymerizations of Experiments 2 and 3 are conducted at 74°C and 75°C, respectively.
The heat aging for 24 hrs results in an increase in melting temperature of at least 8°C. Heat aging for 7 days provided no further increase in Tm2. The same results are obtained when the melt fabrication of the article to be heat aged the same way is by extrusion.

Example 2 - PPVE contents Greater than 4 wt%

The precharge and initiator solution used in Example 1 is used in this Example. The operating procedure of Example 1 used in this Example, with the following exceptions: The polymerization reaction of Experiment 4 in Table 2 uses a reactor temperature of 75°C, an addition of 200 mL of PPVE to the reactor, and a pumping rate of 2.0 mL/min for the PPVE. The polymerization reaction for Experiment 5 in Table 2 uses a reactor temperature of 72°C, an addition of 200 mL of PPVE to the reactor, and a pumping rate of 2.0 mL/min for the PPVE. Recovery of the TFE/PPVE copolymer from the aqueous polymerization medium and melt fabrication is the same as in Example 1.

Table 2

| Exp. | PPVE content - wt% | Tm1 -°C | MFR - g/10 min | Tm2-°C |
|---|---|---|---|---|
| 4 | 4.67 | 308.0 | 8.07 | 314.3 |
| 5 | 4.53 | 307.1 | 3.32 | 314.9 |

The heat aging resulted in an increase in melting temperature of at least 6°C.

**Claims**

1.   Process comprising providing melt-fabricable tetrafluoroethylene/-perfluoro(alkyl vinyl ether) copolymer having a melting temperature (Tm1), melt fabricating said tetrafluoroethylene/perfluoro(alkyl vinyl ether) copolymer into a final-shape article, and heat aging said final-shape article for at least 24 hr at a temperature which is at least 295°C but less than Tm1, to obtain a heat-aged final-shape article wherein the melting temperature of the copolymer taken from the heat aged final-shape article (Tm2) is at least 6°C greater than Tm1.

2.   The process of claim 1 wherein said final-shape article retains its shape during said heat aging.

3.   The process of claim 1 wherein the tetrafluoroethylene/ perfluoro(alkyl vinyl ether) copolymer from which said final-shape article is made has a melting temperature of at least 310°C.

4.   The process of claim 1 wherein said tetrafluoroethylene/ perfluoro(alkyl vinyl ether) copolymer has a melt flow rate of no greater than 10 g/10 min.

5.   The process of claim 1 wherein said tetrafluoroethylene/ perfluoro(alkyl vinyl ether) copolymer is tetrafluoroethylene/ perfluoro(propyl vinyl ether) copolymer

6.   The process of claim 5 wherein said tetrafluoroethylene/perfluoro-(propyl vinyl ether) copolymer prior to said heat aging has a melting temperature (Tm1) of at least 305°C and after said heat aging has a melting temperature (Tm2) of at least 312°C.

7.   The process of claim 5 wherein said tetrafluoroethylene/perfluoro-(propyl vinyl ether) copolymer prior to said heat aging has a melting temperature (Tm1) of at least 308°C and after said heat aging has a melting temperature (Tm2) of at least 316°C.

8.   The process of claim 1 wherein said final-shape article is electrical insulation, tubing, and carriers.

9.   The process of claim 1 wherein the melt fabrication of said tetrafluoroethylene/perfluoro(alkyl vinyl ether) copolymer is by extrusion, injection molding, blow molding, or transfer molding.

10.   The process of claim 1 wherein said melt fabricating involves shearing the melt of said tetrafluoroethylene/perfluoro(alkyl vinyl ether) copolymer at a rate of at least 1 sec$^{-1}$.

**Patentansprüche**

1.   Verfahren umfassend das Bereitstellen eines schmelzproduzierbaren Tetrafluorethylen-Perfluor(alkylvinylether)-Copolymers, das eine Schmelztemperatur (Tm1) aufweist, das Schmelzproduzieren des Tetrafluorethylen-Perfluor(alkylvinylether)-Copolymers in einen Artikel endgültiger Gestalt und das Wärmealtern des Artikels endgültiger Gestalt mindestens 24 h lang bei einer Temperatur, die mindestens 295 °C, jedoch weniger als Tm1, beträgt, um einen wärmegealterten Artikel endgültiger Gestalt zu erhalten, wobei die Schmelztemperatur des Copolymers, am wärmegealterten Artikel endgültiger Gestalt (Tm2) abgenommen, mindestens 6 °C höher liegt als Tm1.

2. Verfahren nach Anspruch 1, wobei der Artikel endgültiger Gestalt seine Gestalt während des Wärmealterns beibehält.

3. Verfahren nach Anspruch 1, wobei das Tetrafluorethylen-Perfluor(alkylvinylether)-Copolymer, aus dem der Artikel endgültiger Gestalt hergestellt worden ist, eine Schmelztemperatur von mindestens 310 °C aufweist.

4. Verfahren nach Anspruch 1, wobei das Tetrafluorethylen-Perfluor(alkylvinylether)-Copolymer eine Schmelzfließrate von nicht mehr als 10 g /10 min aufweist.

5. Verfahren nach Anspruch 1, wobei das Tetrafluorethylen-Perfluor(alkylvinylether)-Copolymer Tetrafluorethylen-Perfluor(propylvinylether)-Copolymer ist.

6. Verfahren nach Anspruch 5, wobei das Tetrafluorethylen-Perfluor(propylvinylether)-Copolymer vor dem Wärmealtern eine Schmelztemperatur (Tm1) von mindestens 305 °C und nach dem Wärmealtern eine Schmelztemperatur (Tm2) von mindestens 312° C aufweist.

7. Verfahren nach Anspruch 5, wobei das Tetrafluorethylen-Perfluor(propylvinylether)-Copolymer vor dem Wärmealtern eine Schmelztemperatur (Tm1) von mindestens 308 °C und nach dem Wärmealtern eine Schmelztemperatur (Tm2) von mindestens 316° C aufweist.

8. Verfahren nach Anspruch 1, wobei der Artikel endgültiger Gestalt eine elektrische Isolierung, Röhre und Träger ist.

9. Verfahren nach Anspruch 1, wobei die Schmelzfertigung des Tetrafluorethylen-Perfluor(alkylvinylether)-Copolymers durch Extrusion, Spritzgießen, Blasformen oder ein Spritzpressverfahren erfolgt.

10. Verfahren nach Anspruch 1, wobei das Schmelzproduzieren die Scherbeanspruchung der Schmelze des Tetrafluorethylen-Perfluor(alkylvinylether)-Copolymers mit einer Rate von mindestens 1 sec$^{-1}$ involviert.

## Revendications

1. Procédé comprenant la fourniture d'un copolymère de tétrafluoroéthylène/perfluoro(éther d'alkyl vinyle) pouvant être fabriqué à l'état fondu et ayant une température de fusion (Tm1), la fabrication à l'état fondu dudit copolymère de tétrafluoroéthylène/perfluoro(éther d'alkyl vinyle) en un article sous forme finale, et la maturation thermique dudit article sous forme finale durant au moins 24 heures à une température qui est d'au moins 295°C mais inférieure à la Tm1, pour obtenir un article sous une forme finale thermiquement vieilli, la température de fusion du copolymère prise à partir de l'article sous une forme finale thermiquement vieilli (Tm2) est au moins de 6°C supérieure à la Tm1.

2. Procédé selon la revendication 1, ledit article sous forme finale conservant sa forme durant ladite maturation thermique.

3. Procédé selon la revendication 1, le copolymère de tétrafluoroéthylène/perfluoro(éther d'alkyl vinyle) à partir duquel ledit article sous une forme finale est fabriqué présentant une température de fusion d'au moins 310°C.

4. Procédé selon la revendication 1, ledit copolymère de tétrafluoroéthylène/perfluoro(éther d'alkyl vinyle) ayant une vitesse d'écoulement à l'état fondu non supérieure à 10g/10 min.

5. Procédé selon la revendication 1, ledit copolymère de tétrafluoroéthylène/perfluoro(éther d'alkyl vinyle) étant un copolymère de tétrafluoroéthylène/perfluoro(éther de propyl vinyle).

6. Procédé selon la revendication 5, ledit copolymère de tétrafluoroéthylène/perfluoro(éther de propyl vinyle) avant ladite maturation thermique ayant une température de fusion (Tm1) d'au moins 305°C et ayant après ladite maturation thermique une température de fusion (Tm2) d'au moins 312°C.

7. Procédé selon la revendication 5, ledit copolymère de tétrafluoroéthylène/perfluoro(éther de propyl vinyle) avant ladite maturation thermique ayant une température de fusion (Tm1) d'au moins 308°C et ayant après ladite maturation thermique une température de fusion (Tm2) d'au moins 316°C.

8. Procédé selon la revendication 1, ledit article sous forme finale étant une isolation électrique, une tuyauterie et des supports.

9. Procédé selon la revendication 1, ladite fabrication à l'état fondu dudit copolymère de tétrafluoroéthylène/perfluoro(éther d'alkyl vinyle) s'effectuant par extrusion, moulage par injection, moulage par soufflage ou moulage par transfert.

10. Procédé selon la revendication 1, ladite fabrication à l'état fondu impliquant le cisaillement de la masse fondue dudit copolymère de tétrafluoroéthylène/perfluoro(éther d'alkyl vinyle) à une vitesse d'au moins 1 sec$^{-1}$.

## REFERENCES CITED IN THE DESCRIPTION

**Patent documents cited in the description**

- US 3635926 A, Carlson

- US 5932673 A, Aten

**Non-patent literature cited in the description**

- Melt Processible Fluoropolymers, The Definitive User's Guide and Databook. **S. EBNESAJJAD.** Fluoroplastics. Plastics Design Library, 2003, vol. 2, 125-127